# FASCICULE DE BREVET EUROPEEN

(11) **EP 1 288 252 B1**
(45) Date de publication et mention de la délivrance du brevet: **09.06.2004**
(21) Numéro de dépôt: 02025475.1
(22) Date de dépôt: 18.12.1998
(51) Int. Cl.: C08K 5/00, C08L 83/04, B29C 33/40, C08K 5/3435, C08K 5/526

(54) **Stabilisation de moules en élastomère de silicone**
Stabilisierung von Formen aus Silikon-Elastomer
Stabilisation of silicone-elastomer moulds

(30) Priorité: 26.12.1997 FR 9716816
(43) Date de publication de la demande: 05.03.2003
(62) Demande divisionnaire de: 98962505.8
(73) Titulaire: Rhodia Chimie, 92100 Boulogne Billancourt (FR)
(72) Inventeur: Gay, Michel, 69100 Villeurbanne (FR); Howe, Fabienne, 69300 Caluire (FR); Pusineri, Christian, 69360 Serezin du Rhone (FR); Viennet, Joelle, F-69440 Mornant (FR)
(74) Mandataire: Trolliet, Maurice

(56) Documents cités:
- EP-A- 0 070 786
- EP-A- 0 787 766

## Description

La présente invention a trait à l'utilisation d'additifs pour la stabilisation des élastomères silicones constitutifs de moules et obtenus par la réticulation de compositions de polycondensation.

L'invention a également pour objet des compositions de polycondensation susceptibles d'être utilisées pour la réalisation de ces élastomères silicones.

L'invention a encore pour objet les moules ainsi obtenus pour la reproduction d'objets décoratifs et industriels par moulage.

Elle a aussi pour objet un procédé de préparation de moules en silicone.

Les compositions silicones, en particulier les compositions silicones de polycondensation, sont utilisées pour la reproduction d'objets décoratifs et industriels par moulage. La reproduction d'objets consiste dans un premier temps à fabriquer un négatif de l'objet à copier, ce négatif étant réalisé en élastomère silicone et se nomme membrane. Après réticulation du silicone, on sépare la membrane de l'objet initial. Cette membrane constitue le moule qui servira à la reproduction de l'objet à copier.

On utilise largement ce type de moule pour la reproduction d'objets en résine telle que résine de polyester, apte à reproduire fidèlement les détails les plus fins de l'objet à copier. De nombreuses reproductions peuvent être ainsi fabriquées. Mais au court de cette utilisation, le moule subit des modifications progressives : les constituants des résines polyesters, et en particulier le styrène, diffusent dans la membrane et se polymérisent. En parallèle, la structure physico-chimique du moule au contact des résines évolue : elle durcit progressivement tout en perdant son caractère anti-adhérant et sa résistance au déchirement. Ces modifications conduisent finalement à l'arrachement de fragments superficiels du moule au moment du démoulage de la pièce en polyester. A ce stade, le moule n'est plus utilisable.

Les mécanismes de dégradation mis en jeu sont divers. Ils peuvent dépendre tout aussi bien de critères liés aux élastomères silicones qu'aux résines ou aux conditions de moulage. Par exemple l'utilisation de résines à haute teneur en styrène ou en peroxyde est un facteur d'aggravation car il accroît les possibilités de diffusion du styrène ou du peroxyde. Le caractère exothermique de la polymérisation de la résine est aussi un facteur d'aggravation. Les diversités des facteurs pouvant affluer sur la dégradation du moule en silicone fait que, jusqu'à ce jour, les solutions proposées non jamais été parfaitement satisfaisantes.

La demande de brevet européen EP-A-787 766 propose d'améliorer la longévité des moules en silicone en incorporant à la composition de polycondensation un additif sélectionné dans un groupe constitué de phénols à empêchement stérique, bisphénols à empêchement stérique, thiobisphénols à empêchement stérique, dialkyldithiophosphates de zinc, diaryldithiophosphates de zinc, amines aromatiques, amines à empêchement stérique qui peuvent être des 1-alkylsébaçates à groupement terminal NR.

Le besoin existe toujours d'une amélioration de la durée de vie des moules silicones et donc d'additifs permettant d'atteindre cet objectif.

La présente invention a donc pour objectif de proposer des additifs permettant de protéger l'élastomère constituant le moule en silicone vis-à-vis de la résine servant à produire la pièce à mouler, en particulier résine de polyester, de manière à permettre la réalisation d'un nombre de moulages supérieur à ce qui était réalisable auparavant, tout en maintenant, voire en améliorant, l'aspect de surface des pièces moulées.

La déposante a trouvé que l'association de phosphites avec un additif capable de générer des groupes 〉N - O• permettaient d'accroître la longévité des moules en silicone dans des proportions inattendues, le moule en silicone provenant de la réticulation d'une composition de polycondensation, ces additifs se comportant de façon synergique.

La déposante a aussi trouvé de manière suprenante que les additifs capables de générer des groupes 〉N - O• étaient efficaces en association y compris les 1-alkylsébaçates à groupement terminal -NOR, alors que les mêmes 1-alkylsébaçates à groupement -NR tels que décrits dans EP-A-787 766 n'entraient pas en synergie avec les autres additifs selon l'invention.

EP-A-076 630 conceme le cas particulier des compositions silicone de polycondensation catalysées par un catalyseur à base de titane chélaté. L'addition d'un thioester ou d'autres additifs tels que le di-butyltertiaire phénol évite que, sous l'effet du catalyseur au titane chélaté, l'élastomère se teinte en jaune au cours du temps.

EP-A-654 497 conceme le cas particulier des compositions silicone de polyaddition comportant un agent de contrôle de la réticulation destiné à éviter une gélification prématurée à température ambiante, ce qui permet de stabiliser la composition que l'on réticulera au moment opportun par chauffage. Comme agent de contrôle de la réticulation, cette demande propose des triazines ayant au moins un groupe peroxy sur un atome de carbone du noyau triazine et/ou un composé organosulfuré de formule R⁶-(S)ₘ-R⁷, dans laquelle R⁶ et R⁷ sont des groupes ayant au moins 3 atomes de carbone monovalent ou un groupe hydrocarboné monovalent présentant une liaison ester ou R⁶ et R⁷ pris ensemble forment un cycle, m étant un nombre entier de 1 à 3.

La présente invention a pour objet l'utilisation, pour augmenter la longévité des moules réalisés en élastomère silicone réticulant par réaction de polycondensation, d'additif capable de stabiliser l'élastomère silicone constituant le moule vis-à-vis des matières à mouler, l'additif consistant en :
- Une association synergique (b) + des phosphites (c), où (b) correspond à des additifs inhibiteurs de radicaux libres capables, dans les conditions du moulage, de générer des radicaux : 〉N - O• , choisis parmi les composés de formule : 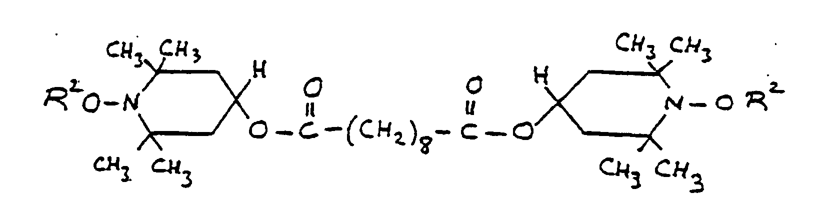
où R² est un alkyle linéaire ou ramifié en C1 à C18, éventuellement substitué par un ou plusieurs groupes phényle(s), ou un cycloalkyle en C5 à C6 ou un benzyle, et où les phosphites (c) sont choisis parmi des phosphites mixtes d'aryle et d'alkyle des formules V à XIII suivantes : 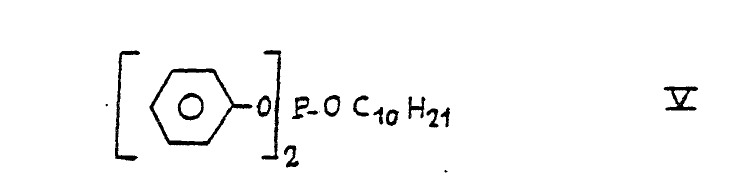 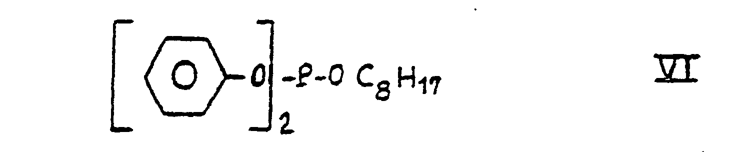 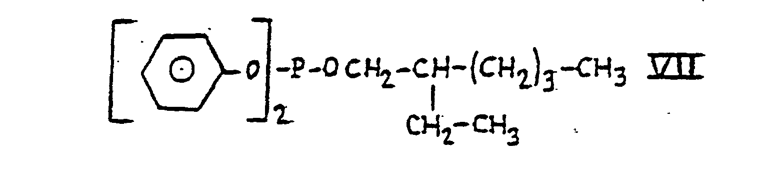 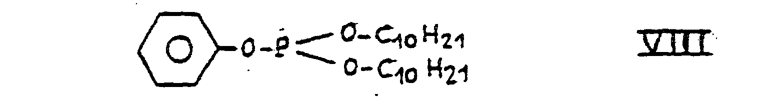 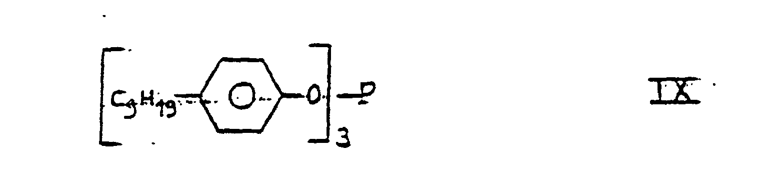 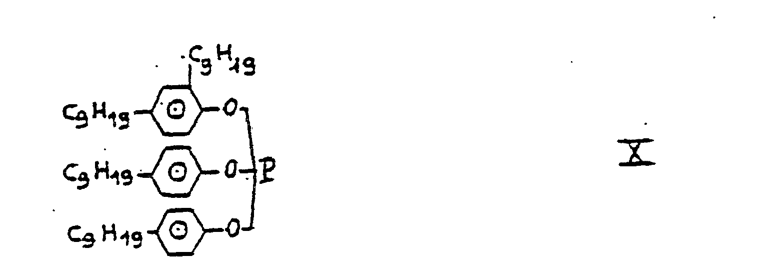 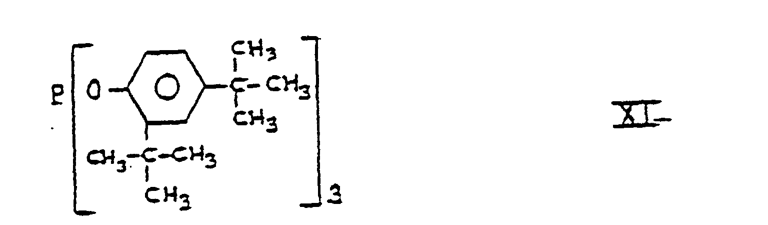 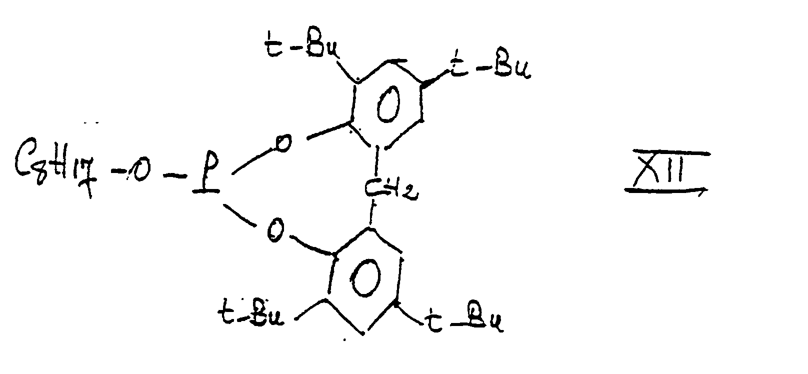 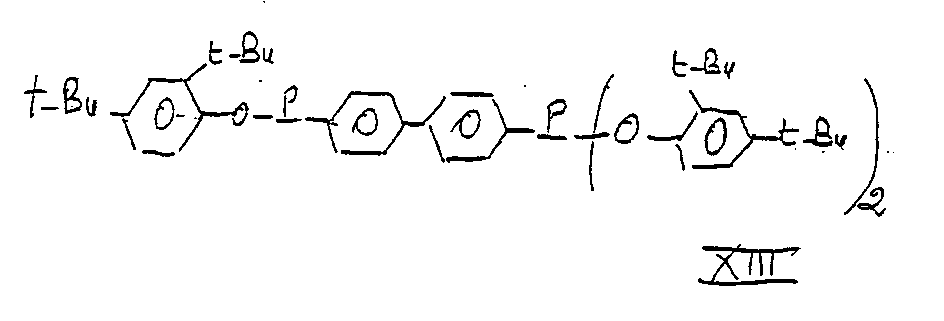
- l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

Plus particulièrement, l'invention a pour objet une telle utilisation pour la stabilisation des élastomères silicones constitutifs de moules destinés au moulage de pièces en polyester, afin d'empêcher notamment, au sein de l'élastomère silicone, la polymérisation du styrène issu de la résine polyester, sans gêner la polymérisation à coeur et en surface du polyester.

De manière particulièrement préférée, l'utilisation vise à l'obtention d'un nombre de moulages par moule en hausse de plus de 10 %, de préférence de plus de 20 %, plus particulièrement de plus de 30 %.

L'invention a aussi pour objet une composition silicone précurseur d'élastomère classique dans laquelle on ajoute un ou plusieurs additifs conformément à ce qui est décrit ci-dessus.

L'ensemble des caractéristiques données ci-après s'applique à ces deux objets.

Les phosphites (c) selon l'invention sont des phosphites mixtes d'aryle et d'alkyle ayant les dénominations chimiques suivantes :
diphénylisodécylphosphite (V)
diphényl-iso-octyl-phosphite (VI)
diphényl-éthyl-2-hexyl-phosphite (VII)
diisodécylphénylphosphite (VIII)
trimonononylphénylphosphite (IX)
phosphite de 2,4-dinonylphényl et de di(4-monononylphényl) (X)
Tris (2,4-ditertiaire-butyl-phényl) phosphite (CAS 31570-04-4) (XI)
2,2-méthylène-bis-(4,6-di-t-butyl phényl) octyl phosphite (XII)
produit vendu sous la dénomination ®Sandostab P-EPQ par Sandoz AG Bâle, Suisse (XIII).

Les phosphites (c) préférés sont choisis parmi les phosphites de formules XI et/ou XII.

Les additifs (b) comprennent de préférence le composé suivant: bis(1-octyloxy-2,2,6,6-tétraméthyl-4-pipéridyl)sébaçate de formule développée :

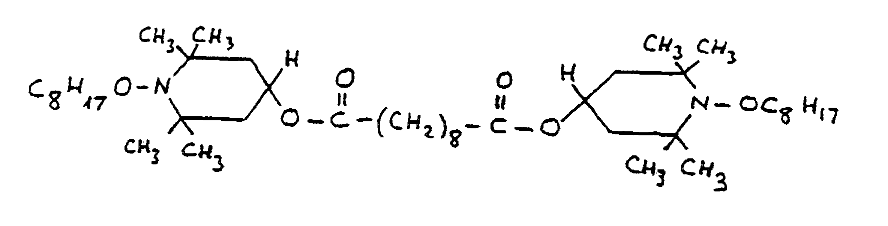

L'additif (b) peut être utilisé comme indiqué ci-avant à raison de 0,2 à 1 parties en poids pour 100 parties de composition silicone, sachant qu'en générale la quantité optimale est de l'ordre de 0,5. Au delà, l'efficacité n'est pas accrue.

L'additif (c) peut être utilisé de préférence à raison de 0,1 à 0,3 parties en poids pour 100 parties de composition silicone.

La présente invention a aussi pour objet des compositions silicone bi-composantes précurseurs d'élastomère silicone, durcissables en un élastomère de • silicone par des réactions de polycondensation, comprenant :
- (A) : 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, éventuellement jusqu'à 20 % en nombre étant des radicaux phényle, et éventuellement au plus 2 % étant des radicaux vinyle,
- (B) : de 0,5 à 15 parties d'un polyalcoxysilane ou polyalcoxysiloxane,
- (C) : de 0,01 à 1 partie (calculée en poids d'étain métal) d'un composé catalytique de l'étain,
- (D) : de 0 à 100 parties de charge minérale siliceuse et de 10 à 130 parties en poids d'huile(s) polydiméthylsiloxane(s) bloquée(s) à chacune des extrémités de chaînes par un motif (CH₃)₃SiO_{0,5} de viscosité comprise entre 10 et 5000 mPa.s,
- (E) : un additif capable de stabiliser l'élastomère silicone constituant le moule vis-à-vis des matières à mouler, l'additif consistant en :
   - une association synergique (b) + des phosphites (c), où (b) correspond à des additifs inhibiteurs de radicaux libres capables, dans les conditions du moulage, de générer des radicaux : 〉N - O• ,choisis parmi les composés de formule : 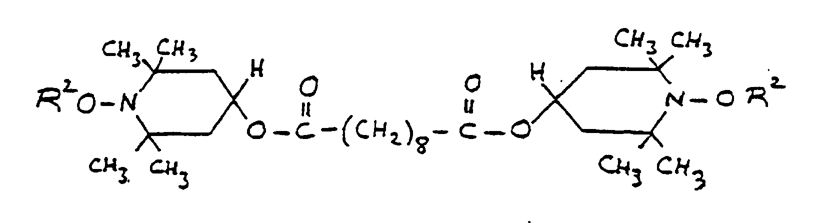 où R² est un alkyle linéaire ou ramifié en C1 à C18, éventuellement substitué par un ou plusieurs groupes phényle(s), ou un cycloalkyle en C5 à C6 ou un benzyle, et où les phosphites (c) sont choisis parmi des phosphites mixtes d'aryle et d'alkyle des formules V à XIII suivantes : 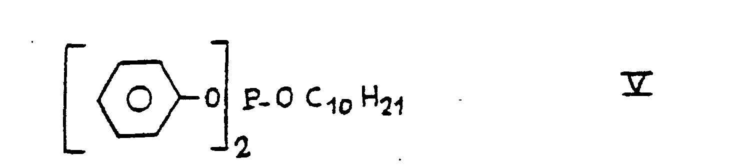 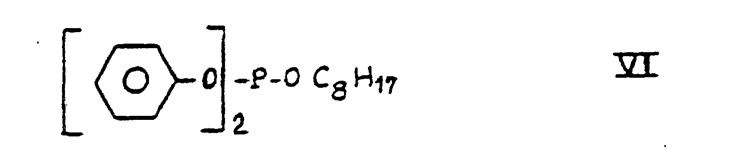 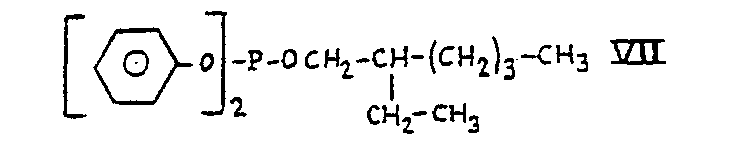 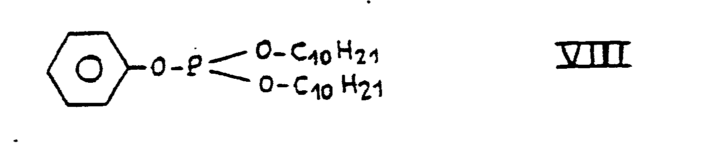 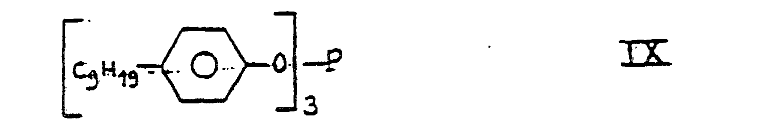 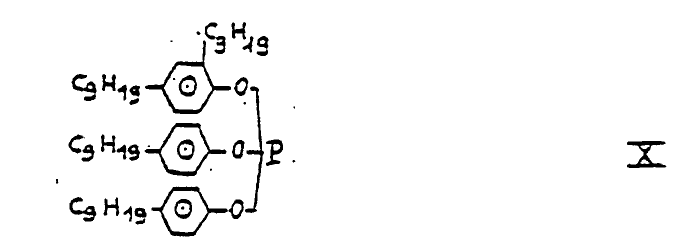 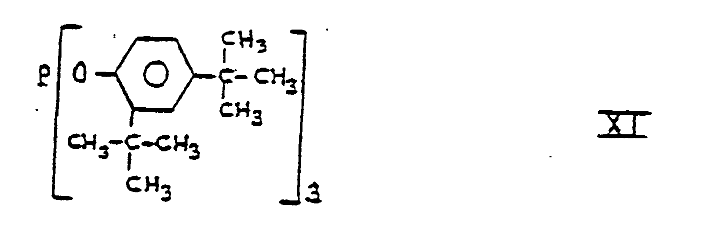 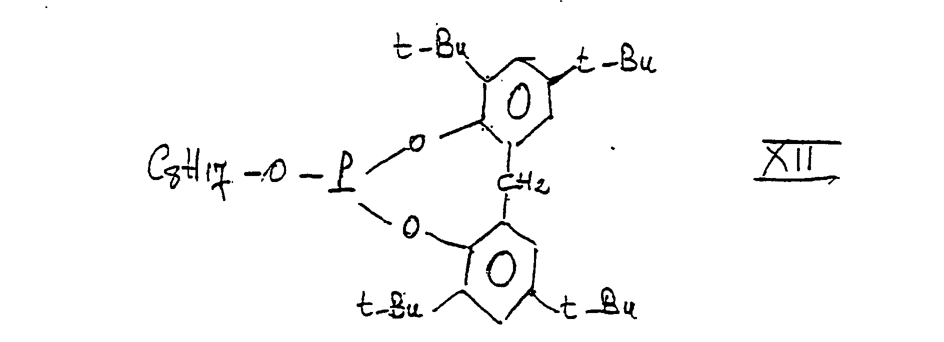 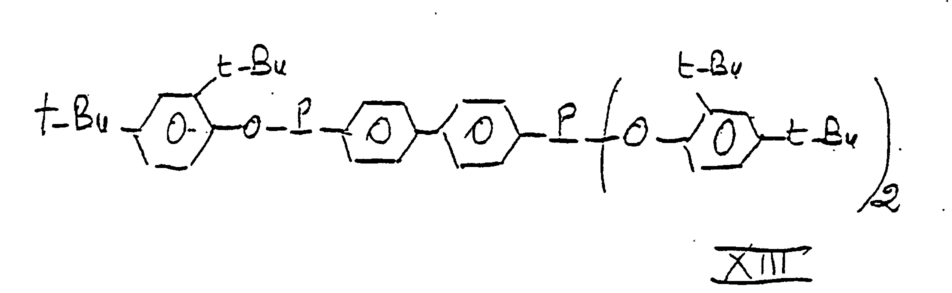
   - l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

Les diorganopolysiloxanes alpha-oméga dihydroxylés (A) sont généralement des huiles dont la viscosité, qui varie de 50 mPa.s à 300 000 mPa.s, est mesurée à 25°C ; dont les radicaux organiques sont choisis parmi les radicaux méthyle; éthyle; vinyle, phényle et trifluoro-3,3,3-propyle, au moins 60% en nombre étant des radicaux méthyle, jusqu'à 20% en nombre étant des radicaux phényle au plus 2% étant des radicaux vinyle.

Toutefois, la présence d'autres motifs, présents généralement à titre d'impuretés, tels que RSiO_{3/2}, RSiO_{1/2} et SiO_{4/2} n'est pas exclue dans la proportion notamment d'au plus 1 % par rapport au nombre de motifs diorganosiloxyles.

Les radicaux organiques, liés aux atomes de silicium des huiles de base, représentés par le symbole R, sont choisis parmi les radicaux méthyle, éthyle, vinyle, phényle et trifluoro-3,3,3 propyle.

Ces huiles de base sont, dans leur grande majorité, commercialisées par les fabricants de silicones. D'autre part, leurs techniques de fabrication sont bien connues ; on les trouve décrites par exemple dans les brevets français FR-A-1 134 005, FR-A-1 198 749, FR-A-1 226 745.

Comme exemples de silane monomère (B) qui, associés à des polydiorganosiloxanes alpha-oméga dihydroxylés (A), peuvent être utilisés avantageusement en compositions bi-composantes, on peut citer les polyalcoxysilanes et en particulier ceux de formules :

Si(OC₂H₅)₄ ; Si(O-n-C₃H₇)₄ ; Si(O-isoC₃H₇)₄ ; Si(OC₂H₄OCH₃)₄;

CH₃Si(OCH₃)₃ ; CH₂ =CHSi(OCH₃)₃ CH₃Si(OC₂H₄OCH₃)₃;

ClCH₂Si(OC₂H₅)₃ ; CH₂ = CHSi(OC₂H₄OCH₃)₃

A tout ou partie des silanes monomères ci-dessus décrits on peut substituer des polyalcoxypolysiloxanes dont chaque molécule compte au moins deux, de préférence trois groupes hydrolysables.

Les agents réticulants (B) sont des produits accessibles sur le marché des silicones de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Les compositions selon l'invention peuvent comporter en outre des charges (D), renforçantes ou semi-renforçantes ou de bourrage, qui sont choisies parmi les charges siliceuses.

Les charges renforçantes sont choisies de préférence parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1 µm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthylchlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 µm (micromètre) et sont choisies parmi le quartz broyé, les argiles calcinées et les terres de diatomées.

On peut généralement utiliser de 0 à 100 parties, de préférence de 5 à 80 parties de charge pour 100 parties d'huile (A).

Les compositions de silicone définies ci-dessus réticulent à température ambiante en présence d'humidité apportée par l'air et/ou contenue dans la composition. Ces compositions dites à deux composantes ou à deux emballages sont décrites par exemple dans les brevets US-A-3 678 002, US-A-3 888 815, US-A-3 933 729, US-A-4 064 096 et GB-A-2 032 936.

Les catalyseurs (C) à l'étain sont abondamment décrits dans la littérature ci-dessus ; ce peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2^{ème} édition).

On peut en particulier citer le naphténate, l'octanoate, l'oléate, le butyrate, le dilaurate de dibutylétain, le diacétate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963.

On peut également utiliser le produit de réaction d'un dialkyldialcoxysilane sur un carboxylate d'étain comme décrit dans le brevet US-A-3 862 919.

On peut également utiiser le produit de réaction d'un silicate d'alkyle ou d'un alkytrialcoxysilane sur le diacétate de dibutylétain comme décrit dans le brevet belge BE-A-842 305.

Pour revenir sur les agents de réticulation (B), on préfère plus particulièrement les alkyltrialcoxysilanes, les silicates d'alkyle et les polysilicates d'alkyle, dans lesquels les radicaux organiques sont des radicaux alkyles ayant de 1 à 4 atomes de carbone.

Les silicates d'alkyle peuvent être choisis parmi le silicate de méthyle, le silicate d'éthyle, le silicate d'isopropyle, le silicate de n-propyle et les polysilicates choisis parmi les produits d'hydrolyse partielle de ces silicates ce sont des polymères constitués d'une proportion importante de motifs de formule (R⁴O)₃SiO_{0,5}, (R⁴O)SiO_{1,5}, (R⁴O)₂SiO et SiO₂ ; le symbole R⁴ représentant les radicaux méthyle, éthyle, isopropyle, n-propyle. Pour les caractériser, on se base habituellement sur leur teneur en silice qui est établie par dosage du produit d'hydrolyse d'un échantillon.

On peut en particulier utiliser comme polysilicate, un silicate d'éthyle partiellement hydrolysé commercialisé sous la marque "Ethyl Silicate-40®" par Union Carbide Corporation, ou un silicate de propyle partiellement hydrolysé.

Les compositions de polycondensation comprennent en outre, comme indiqué ci-avant, de 10 à 130 parties en poids d'huile(s) polydiméthylsiloxane(s) bloquée(s) à chacune des extrémités de chaînes par un motif (CH₃)₃ SiO_{0,5}, de viscosité à 25°C comprise entre 10 et 5000 mPa.s, pour 100 parties d'huile(s) (A).

Les compositions selon l'invention peuvent être mises en formes, extrudées ou en particulier moulées suivant des formes variées, puis être durcies à la température ambiante en un élastomère à l'humidité atmosphérique ou par addition d'eau. Un léger chauffage à une température de 20 à 150°C peut accélérer le ducissement.

Pour les modalités plus préférées du constituant (E), on se reportera aux indications données plus haut à propos des combinaisons synergiques d'additifs (b) et (c).

L'invention a encore pour objet les moules en élastomère silicone susceptibles d'être obtenus par réticulation d'une composition de polycondensation telle que décrite ci-dessus. Elle a également pour objet l'élastomère silicone obtenu.

La présente invention va être maintenant décrite plus en détail à l'aide de modes de réalisation pris à titre d'exemples non limitatifs.

### EXEMPLE

### Préparation de composition silicone réticulant à température ambiante par réaction de polycondensation

### 1) Mélange de base :

On prépare un mélange de base par malaxage de :
- 16,9 parties (en poids) de silice de pyrogénation ayant une surface spécifique BET de 300 m²/g, traitée par de l'hexaméthyldisilazane,
- 30,2 parties d'une huile polydiméthylsiloxane bloquée à chacune des extrémités de chaînes par un motif (CH₃)₃SiO_{0,5} ayant une viscosité de 500 mPa.s à 25°C
- 26,5 parties d'une huile polydiméthylsiloxane hydroxylée bloquée à chacune des extrémités de chaînes par un motif (CH₃)₂(OH)SiO_{0,5} ayant une viscosité de 14 000 mPa.s à 25°C,
- 10 parties d'un agent de coloration à base d'un mélange de TiO₂ (60 % en poids) dans une huile polydiméthylsiloxane bloquée à chacune des extrémités de chaînes par un motif (CH₃)₃SiO_{0,5} ayant une viscosité de 1 000 mPa.s à 25 °C (40 % en poids),
- 14,2 parties de quartz broyé présentant un diamètre moyen de particules de 10 µm,
- 0,2 partie d'eau,
- 0,2 partie d'une huile polydiméthylsiloxane hydroxylée bloquée à chacune des extrémités de chaînes par un motif (CH₃)₂(OH)SiO_{0,5} ayant une viscosité de 75 mPa.s à 25°C, et
- la quantité voulue d'additif(s).

### 2) Mélange catalysé :

Le mélange de base précité est homogénéisé pendant 1 heure à 23°C, et à 100 parties de ce mélange on ajoute 5 parties de catalyseur à base de polysilicate d'éthyle (28 % en poids) et de dilaurate de di-n-butylétain (3 % en poids) mis en solution dans une huile polydiméthylsiloxane bloquée à chacune des extrémités de chaînes par un motif (CH₃)₃ SiO_{0,5} ayant une viscosité de 50 mPa.s à 25°C.

### 3) Mise en oeuvre du silicone :

Le mélange de base catalysé comme indiqué ci-avant, est homogénéisé pendant environ 1 minute à 23 °C, puis il est dégazé pendant environ 10 minutes sous un vide de 20.10² Pa. Le produit ainsi dégazé est ensuite coulé dans les moules appropriés. Le produit moulé est réticulé à température ambiante (23 °C), et on procède au démoulage au bout de 4 jours.

### 4) Des essais comparatifs (tableau 1) ont été réalisés sur la base de différents additifs. Des précisions sur certains additifs sont données ci-après.

Tinuvin 123 (Ciba Geigy) = bis(1-octyloxy-2,2,6,6-tetraméthyl-4-pipéridyl) sébaçate
Tinuvin 765 (Ciba Geigy) = bis(1,2,2,6,6,-pentaméthyl-4-pipéridyl) sébaçate
Phosphite phénolique 29 composé (XI)
Phosphite phénolique 32 composé (XII).

Les résultats sont donnés en nombre de pièces en polyester qu'il a été possible de mouler avec un moule additionné comme indiqué.

La résine de polyester ayant servi aux moulages est une résine vendue par DSM (BASF) France sous la dénomination Synolite® 0328-A-1. La mise en oeuvre est la suivante :
- à 100 parties de résine, on ajoute 0,2 parties en poids d'octoate de cobalt (activateur) ; puis on ajoute 2 parties en poids de peroxyde de méthyléthylcétone pour 100 parties du mélange précédent.

**Tableau 1**

| Additifs | Teneur | Résultat (nombre de pièces) | | | | | |
|---|---|---|---|---|---|---|---|
| Essai | | 1 | 2 | 3 | 4 | 5 | 6 |
| Témoin | | 67 | 50 | 49 | 49 | 47 | X |
| Tinuvin 123 | 0,5 | 52 | 57 | 63 | 68 | 67 | |
| Tinuvin 765 | 0,5 | | | | | 43 | |
| Oléate cuivrique | 0,5 | | | | 33 | | |
| Tinuvin123/ Phosphite phénolique29 | 1/0.11 | | | 72 | | | |
| Adipate d'octyle/ Phosphite Phénolique 32 | 1/0,11 | | | | | 47 | |
| Adipate d'octyle Phosphite Phénolique32/ Tinuvin123 | 1/0,11/0 ,5 | | | | | 80 | |
| Teneur : parties en poids pour 100 parties de composition silicone | | | | | | | |

## Revendications

1. Utilisation, pour augmenter la longévité des moules réalisés en élastomère silicone réticulant par réaction de polyaddition ou de polycondensation, d'additif capable de stabiliser l'élastomère silicone constituant le moule vis-à-vis des matières à mouler, l'additif consistant en :
- une association synergique (b) + un phosphite (c), où (b) correspond à des additifs inhibiteurs de radicaux libres capables, dans les conditions du moulage, de générer des radicaux : 〉N - O**•** choisis parmi les composés de formule : 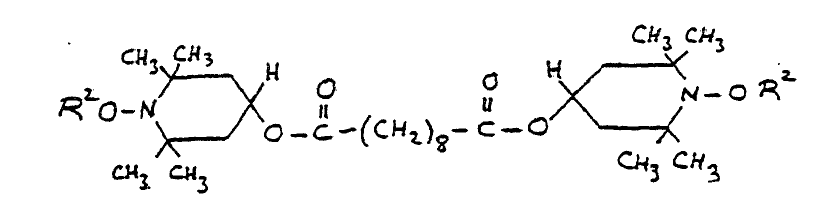
où R² est un alkyle linéaire ou ramifié en C1 à C18, éventuellement substitué par un ou plusieurs groupes phényle(s), ou un cycloalkyle en C5 à C6 ou un benzyle, et où le phosphite (c) est choisi parmi les phosphites de formules V à XIII suivantes : 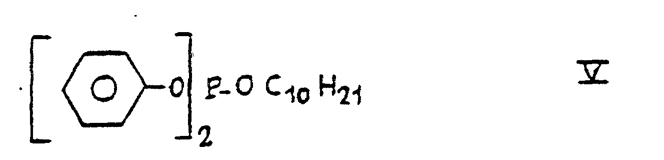 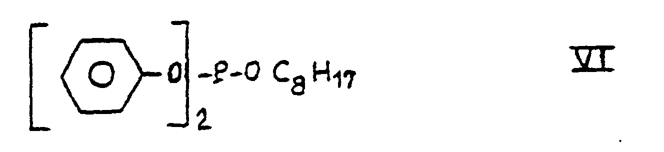 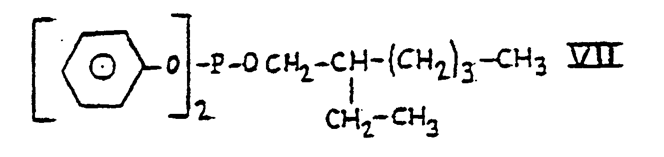 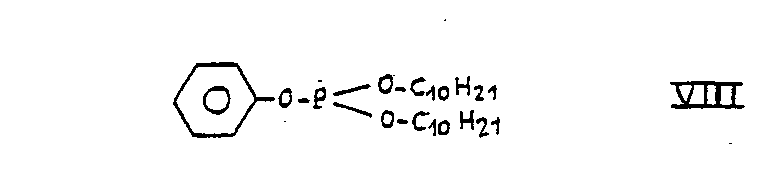 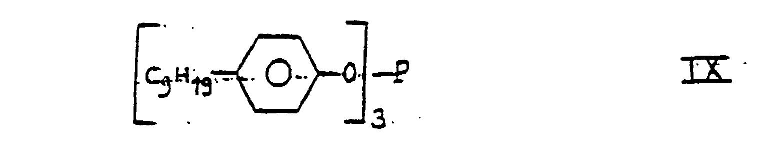 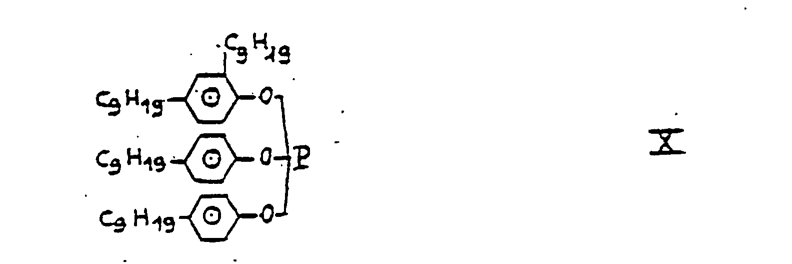 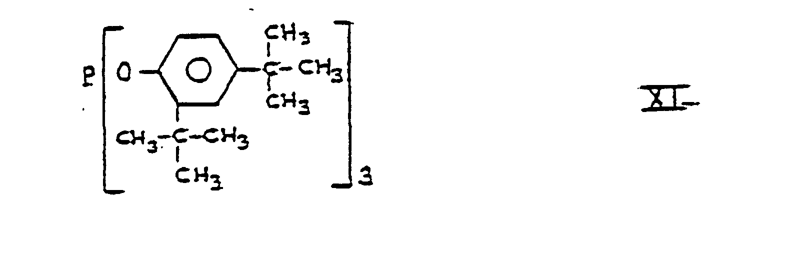 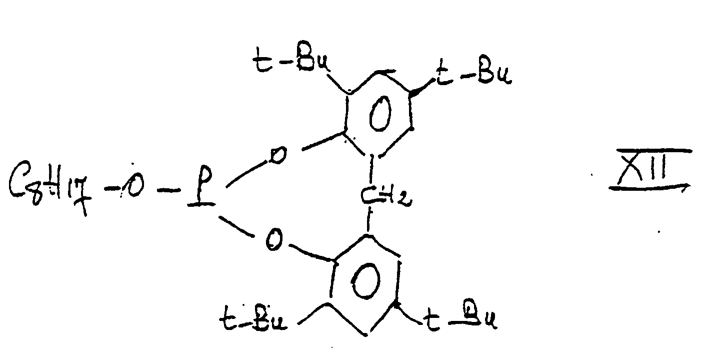 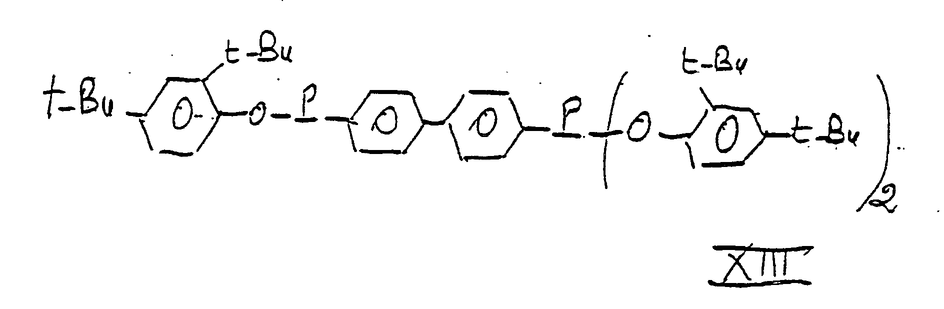
- l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

2. Utilisation selon la revendication 1 pour la stabilisation des élastomères silicones constitutifs de moules destinés au moulage de pièces en résine polyester.

3. Utilisation selon l'une quelconque des revendications 1 à 2, **caractérisée en ce que** l'additif (b) est le bis-(1-octyloxy-2,2,6,6-tetraméthyl-4-pipéridyl)sébaçate.

4. Utilisation selon l'une quelconque des revendications 1 à 3, **caractérisée en ce que** le phosphite (c) est choisi parmi les phosphites de formules XI et XII.

5. Composition silicone bicomposante précurseur d'élastomère silicone et réticulable par une réaction de polycondensation, comprenant :
• (A) : 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, éventuellement jusqu'à 20 % en nombre étant des radicaux phényle, et éventuellement au plus 2 % étant des radicaux vinyle,
• (B) de 0,5 à 15 parties d'un polyalcoxysilane ou polyalcoxysiloxane,
• (C) : de 0,01 à 1 partie (calculée en poids d'étain métal) d'un composé catalytique de l'étain,
• (D) : de 0 à 100 parties de charge minérale siliceuse et de 10 à 130 parties en poids d'huile(s) polydiméthylsiloxane(s) bloquée(s) à chacune des extrémités de chaînes par un motif (CH₃)₃SiO_{0,5} de viscosité comprise entre 10 et 5000 mPa.s,
• (E) : un additif capable de stabiliser l'élastomère silicone constituant le moule vis-à-vis des matières à mouler, l'additif consistant en :
- une association synergique (b) + un phosphite (c), où (b) correspond à des additifs inhibiteurs de radicaux libres capables, dans les conditions du moulage, de générer des radicaux : 〉N - O• ,choisis parmi les composés de formule : 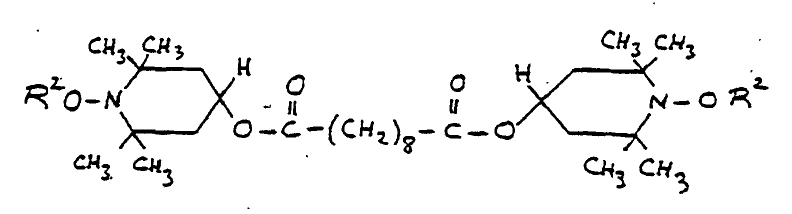 où R² est un alkyle linéaire ou ramifié en C1 à C18, éventuellement substitué par un ou plusieurs groupes phényle(s), ou un cycloalkyle en C5 à C6 ou un benzyle, et où le phosphite (c) est choisi parmi les phosphites de formules V à XIII suivantes : 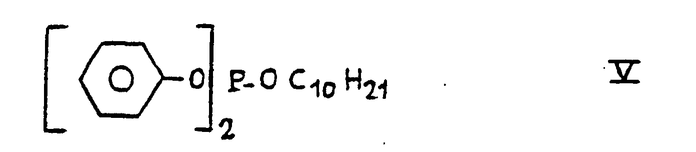 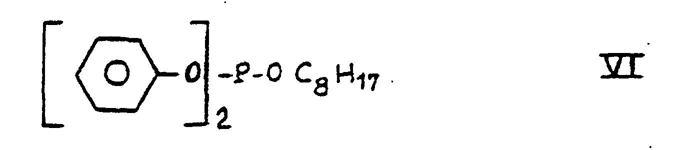 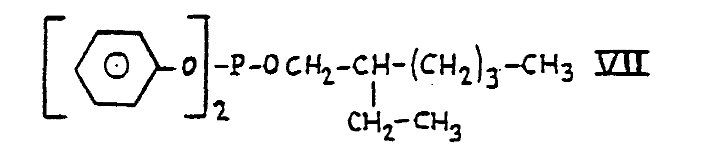 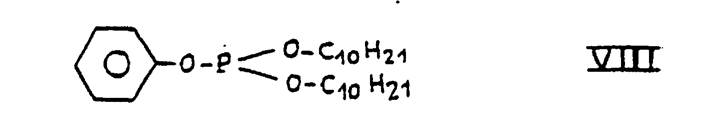 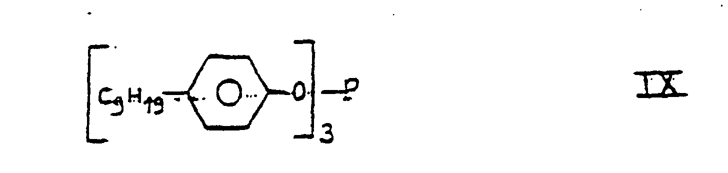 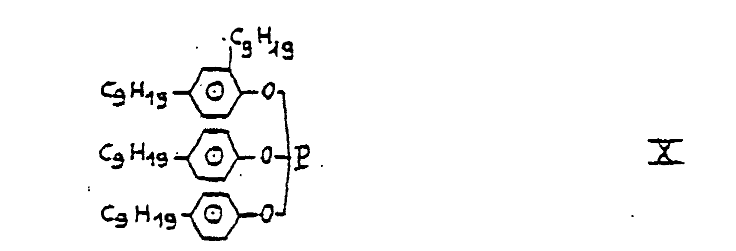 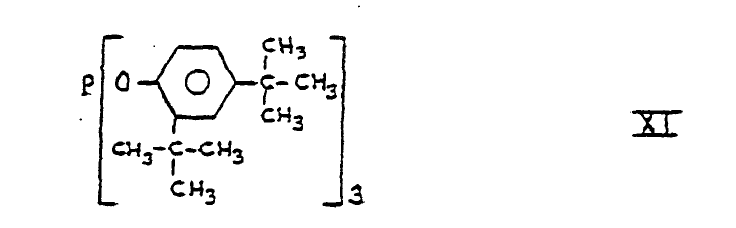 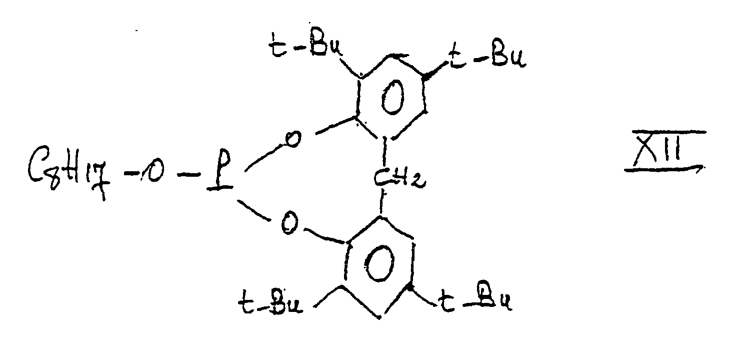 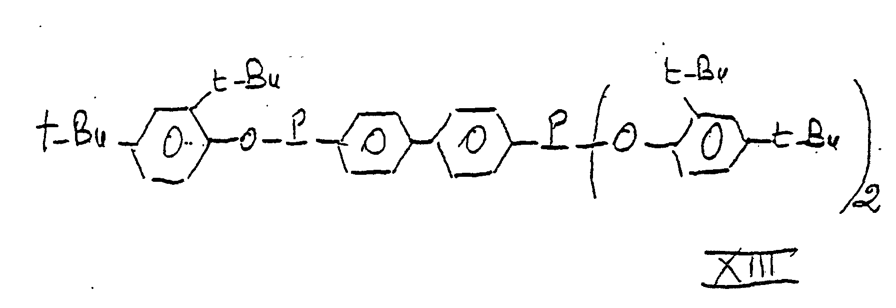
- l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

6. Composition selon la revendication 5, **caractérisée en ce que** l'additif (b) est le bis-(1-octyloxy-2,2,6,6-tetraméthyl-4-pipéridyl)sébaçate.

7. Composition selon la revendication 5 ou 6, **caractérisée en ce que** le phosphites(c) est choisi parmi les phosphites de formules XI et XII.

## Patentansprüche

1. Verwendung eines Zusatzstoffes zur Erhöhung der Lebensdauer von Gießformen aus einem Siliconelastomer, das durch die Reaktion der Polyaddition oder der Polykondensation vernetzt, wobei der Zusatzstoff geeignet ist, das Siliconelastomer, aus dem die Gießform besteht, gegenüber den zu gießenden Materialien zu stabilisieren, und der Zusatzstoff besteht aus:
- einer synergistischen Assoziation (b) + einem Phosphit (c), worin (b) Inhibitor-Zusatzstoffen mit freien Radikalen entspricht, die fähig sind, unter den Bedingungen des Formgießens Radikale 〉N-O• zu erzeugen, ausgewählt unter den Verbindungen der Formel 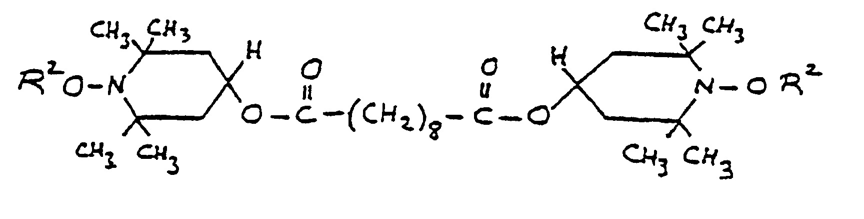
worin R² ein lineares oder verzweigtes Alkyl mit 1 bis 18 Kohlenstoffatomen, gegebenenfalls substituiert durch eine oder mehrere Gruppen Phenyl, oder ein Cycloalkyl mit 5 bis 6 Kohlenstoffatomen oder ein Benzyl darstellt, und worin das Phosphit (c) unter den Phosphiten der folgenden Formeln V bis XIII ausgewählt wird: 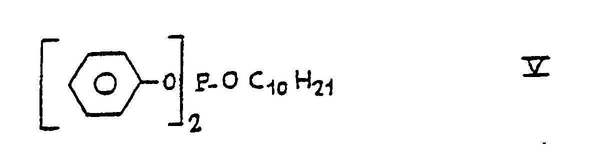 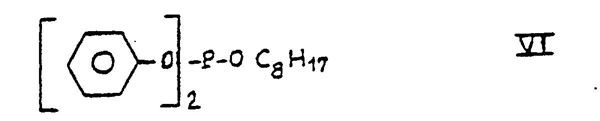 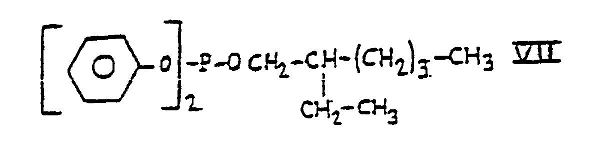 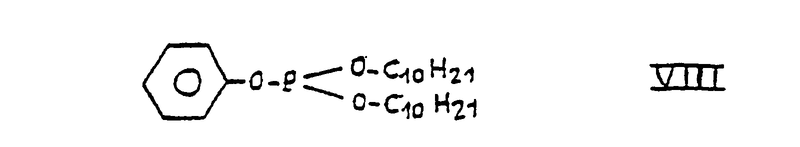 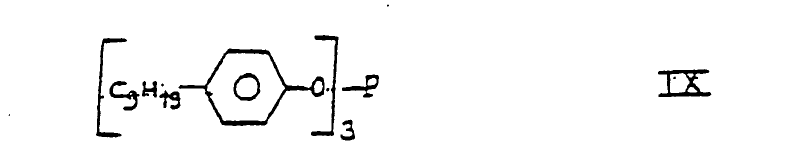 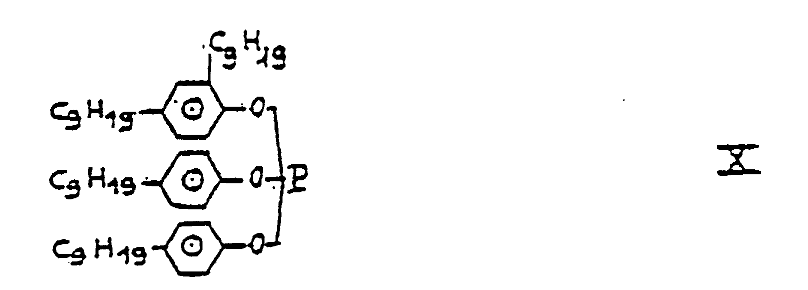 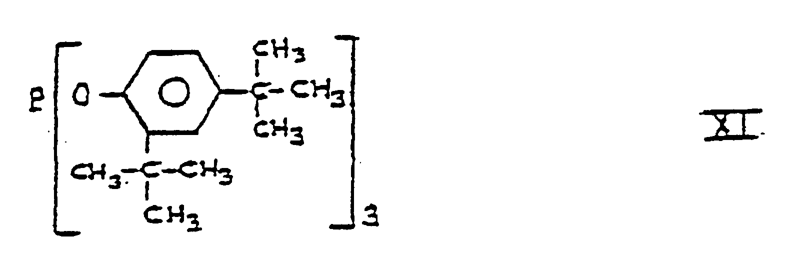 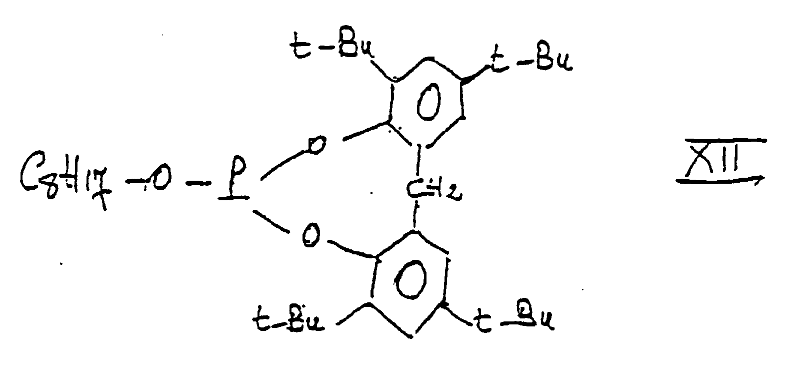 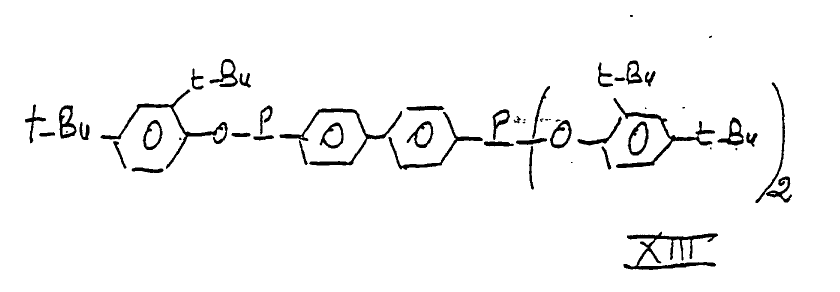
- und der Zusatzstoff (b) in einem Verhältnis von 0,2 bis 1 Gewichtsteil und der Zusatzstoff (c) in einem Verhältnis von 0,05 bis 1 Gewichtsteil, pro 100 Teile der zur Realisierung des Siliconelastomers dienenden Siliconzusammensetzung, verwendet werden.

2. Verwendung nach Anspruch 1 zur Stabilisierung von Gießformen, die aus Siliconelastomeren bestehen, vorgesehen für das Formgießen von Teilen aus Polyesterharz.

3. Verwendung nach irgendeinem der Ansprüche 1 bis 2, **dadurch gekennzeichnet, daß** der Zusatzstoff (b) Bis-(1-Octyloxy-2,2,6,6-tetramethyl-4-piperidyl)-sebacat ist.

4. Verwendung nach irgendeinem der Ansprüche 1 bis 3, **dadurch gekennzeichnet, daß** das Phosphit (c) unter den Phosphiten der Formeln XI und XII ausgewählt wird.

5. Zweikomponenten-Silicon-Zusammensetzung als Vorläufer für Siliconelastomer und vernetzbar durch eine Reaktion der Polykondensation, umfassend:
• (A) : 100 Teile eines alpha-omega-Dihydroxydiorganopolysiloxan-Öles mit einer Viskosität von 50 bis 300000 mPa.s, dessen organische Reste ausgewählt werden unter den Resten Methyl, Ethyl, Vinyl, Phenyl und 3,3,3-Trifluorpropyl, wobei zahlenmäßig mindestens 60 % Methylreste, gegebenenfalls zahlenmäßig bis zu 20 % Phenylreste und gegebenenfalls höchstens 2 % Vinylreste sind,
• (B) : 0,5 bis 15 Teile eines Polyalkoxysilans oder Polyalkoxysiloxans,
• (C) : 0,01 bis 1 Teil (berechnet in Gewicht Zinnmetall) einer katalytischen Zinnverbindung,
• (D) : 0 bis 100 Teile eines siliciumhaltigen mineralischen Füllstoffes und 10 bis 130 Gewichtsteile von Polydimethylsiloxan-Öl (en), blockiert an jedem seiner (ihrer) Kettenenden durch eine Struktureinheit (CH₃)₃SiO_{0,5}, mit einer Viskosität zwischen 10 und 5000 mPa.s,
• (E) : einen Zusatzstoff, der geeignet ist, das die Gießform bildende Siliconelastomer gegenüber den zu gießenden Materialien zu stabilisieren, wobei der Zusatzstoff besteht aus:
- einer synergistischen Assoziation (b) + einem Phosphit (c), worin (b) Inhibitor-Zusatzstoffen mit freien Radikalen entspricht, die fähig sind, unter den Bedingungen des Formgießens Radikale 〉N-O• zu erzeugen, ausgewählt unter den Verbindungen der Formel 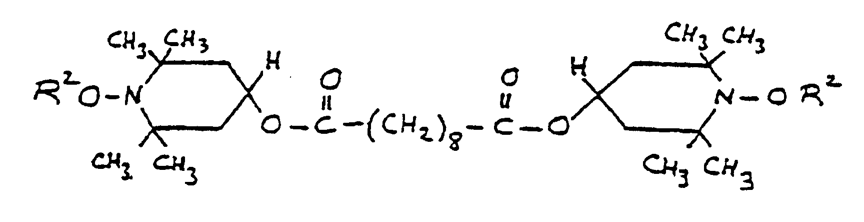 worin R² ein lineares oder verzweigtes Alkyl mit 1 bis 18 Kohlenstoffatomen, gegebenenfalls substituiert durch eine oder mehrere Gruppen Phenyl, oder ein Cycloalkyl mit 5 bis 6 Kohlenstoffatomen oder ein Benzyl darstellt, und worin das Phosphit (c) unter den Phosphiten der folgenden Formeln V bis XIII ausgewählt wird: 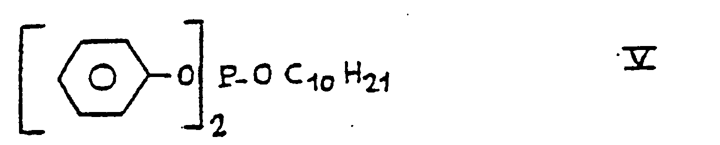 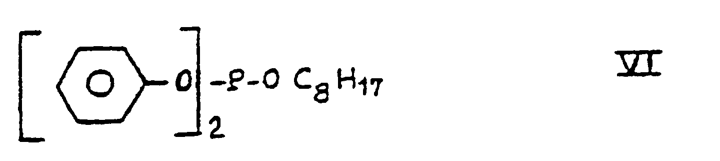 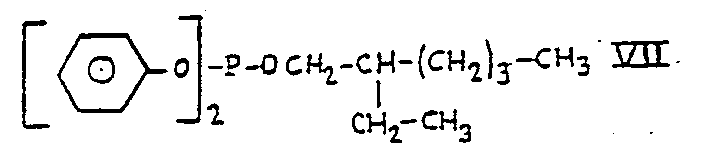 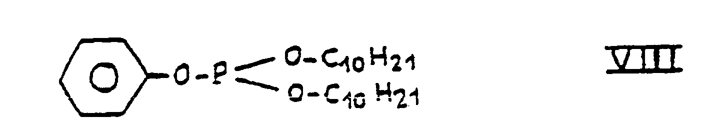 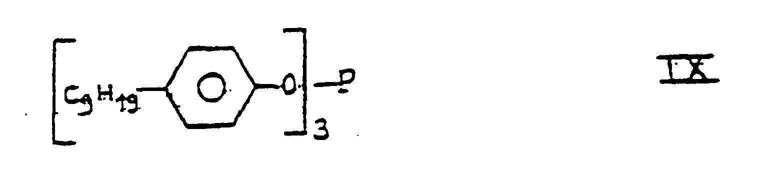 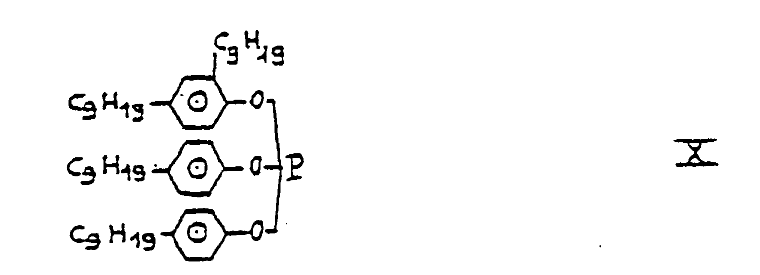 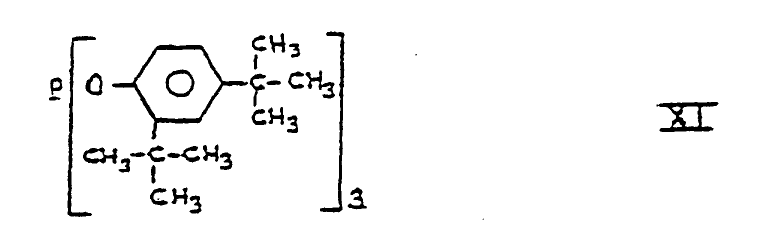 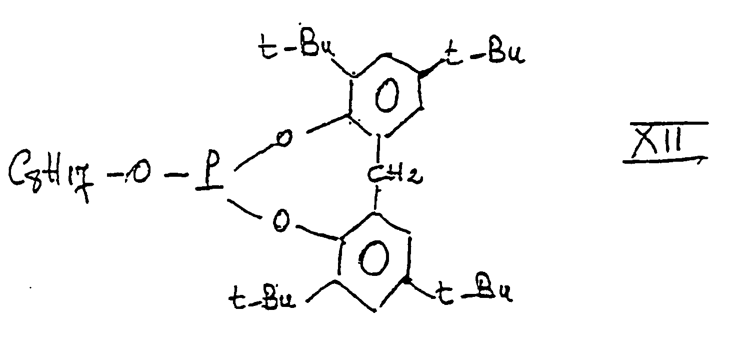 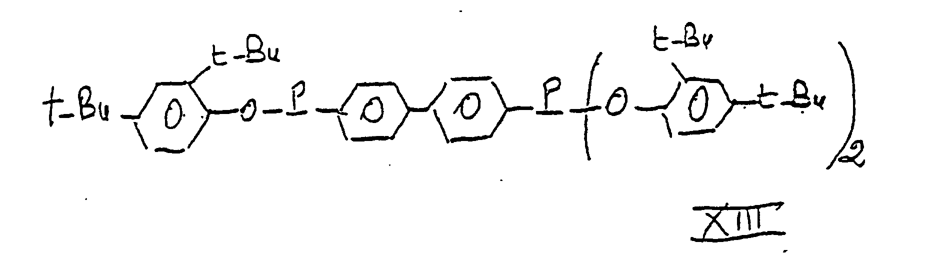
- und der Zusatzstoff (b) in einem Verhältnis von 0,2 bis 1 Gewichtsteil und der Zusatzstoff (c) in einem Verhältnis von 0,05 bis 1 Gewichtsteil, pro 100 Teile der zur Realisierung des Siliconelastomers dienenden Siliconzusammensetzung, verwendet werden.

6. Zusammensetzung nach Anspruch 5, **dadurch gekennzeichnet, daß** der Zusatzstoff (b) Bis-(1-octyloxy-2,2,6,6-tetramethyl-4-piperidyl)-sebacat ist.

7. Zusammensetzung nach Anspruch 5 oder 6, **dadurch gekennzeichnet, daß** das Phosphit (c) unter den Phosphiten der Formeln XI und XII ausgewählt wird.

## Claims

1. Use, in increasing the longevity of moulds prepared from silicone elastomer crosslinking by a polyaddition or polycondensation reaction, of an additive capable of stabilizing the silicone elastomer constituting the mould with respect to the materials to be moulded, the additive consisting of:
- a synergistic combination (b) + a phosphite (c), where (b) corresponds to additives which inhibit free radicals capable, under the moulding conditions, of generating radicals:
〉N-O•, chosen from the compounds of formula: 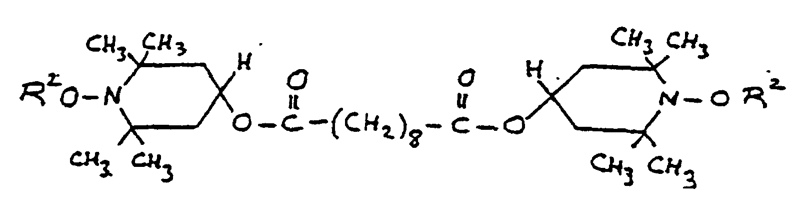 where R² is a linear or branched C₁ to C₁₈ alkyl, optionally substituted by one or more phenyl groups, or a C₅ to C₆ cycloalkyl or a benzyl, and where the phosphite (c) is chosen from the phosphites of following formulae V to XIII: 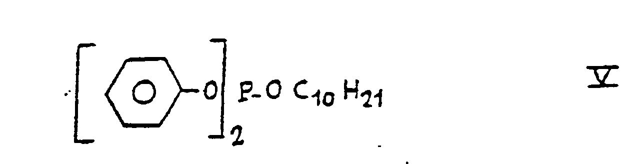 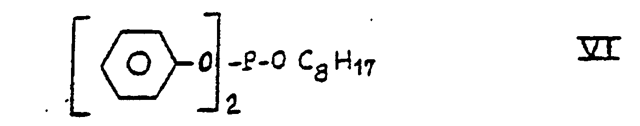 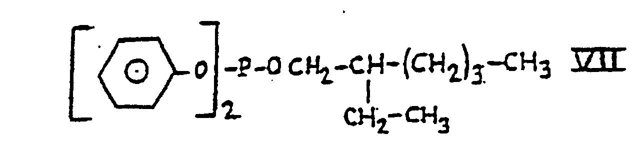 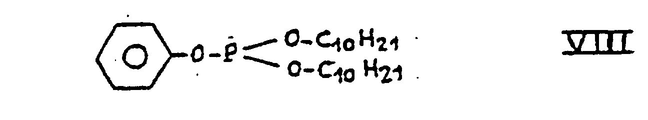 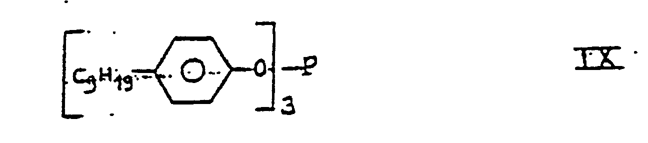 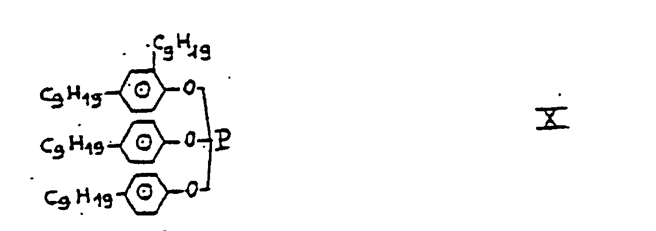 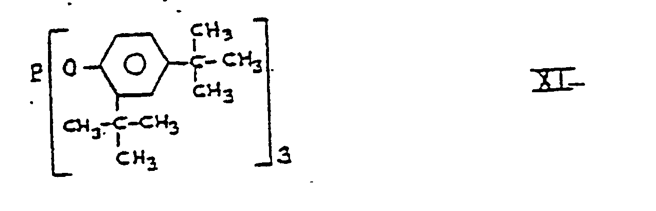 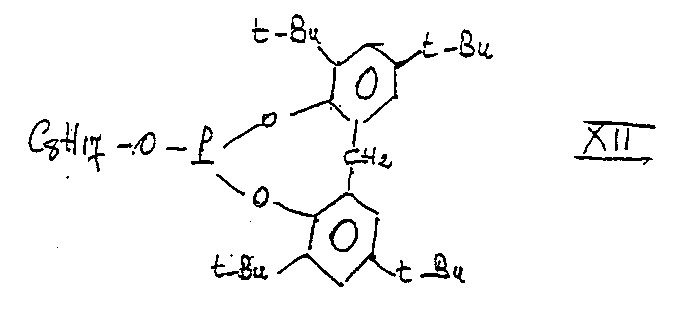 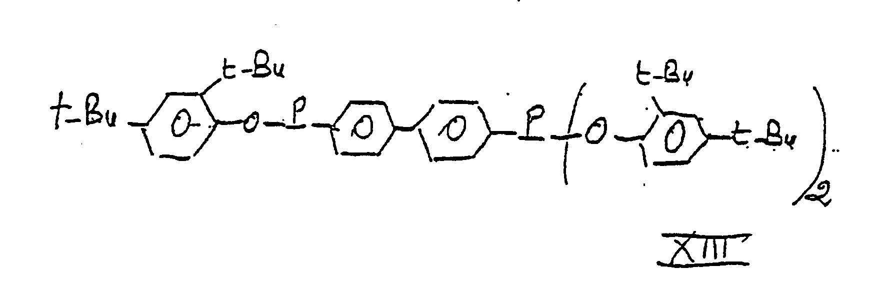
- the additive (b) being used in a proportion of 0.2 to 1 part by weight and the additive (c) being used in a proportion of 0.05 to 1 part by weight, per 100 parts of silicone composition used to prepare the silicone elastomer.

2. Use according to claim 1, in the stabilization of the constituent silicone elastomers of moulds intended for the moulding of components made of polyester resin.

3. Use according to either one of claims 1 and 2, **characterized in that** the additive (b) is bis (1-octyloxy-2,2,6,6-tetramethyl-4-piperidyl) sebacate.

4. Use according to any one of claims 1 to 3, **characterized in that** the phosphite (c) is chosen from the phosphites of formulae XI and XII.

5. Two-component silicone composition which is a silicone elastomer precursor and which can be crosslinked by a polycondensation reaction, comprising:
• (A): 100 parts of an α,ω-dihydroxydiorganopolysiloxane oil with a viscosity of 50 to 300 000 mPa·s, the organic radicals of which are chosen from methyl, ethyl, vinyl, phenyl and 3,3,3-trifluoropropyl radicals, at least 60% by number being methyl radicals, optionally up to 20% by number being phenyl radicals and optionally at most 2% being vinyl radicals,
• (B) : from 0.5 to 15 parts of a polyalkoxysilane or polyalkoxysiloxane,
• (C): from 0.01 to 1 part (calculated as weight of tin metal) of a catalytic tin compound,
• (D): from 0 to 100 parts of siliceous inorganic filler and from 10 to 130 parts by weight of polydimethylsiloxane oil(s) blocked at each of the chain ends by a (CH₃)₃SiO_{0.5} unit, with a viscosity of between 10 and 5000 mPa·s,
• (E): an additive capable of stabilizing the silicone elastomer constituting the mould with respect to the materials to be moulded, the additive consisting of:
- a synergistic combination (b) + a phosphite (c), where (b) corresponds to additives which inhibit free radicals capable, under the moulding conditions, of generating radicals:
〉N - O•, chosen from the compounds of formula: 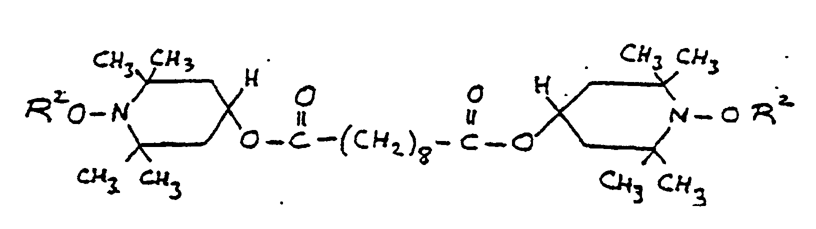 where R² is a linear or branched C₁ to C₁₈ alkyl, optionally substituted by one or more phenyl groups, or a C₅ to C₆ cycloalkyl or a benzyl, and where the phosphite (c) is chosen from the phosphites of following formulae V to XIII: 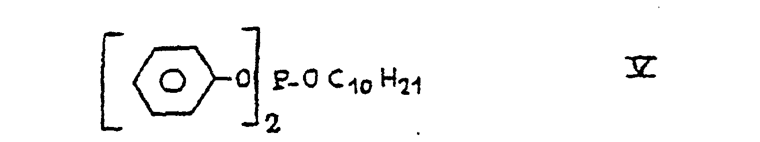 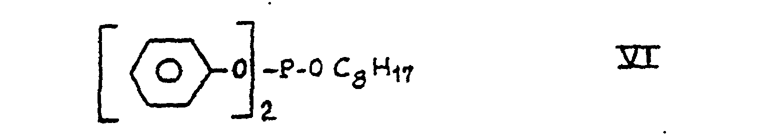 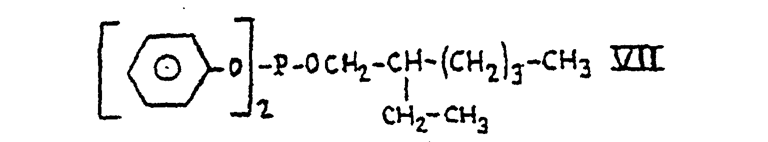 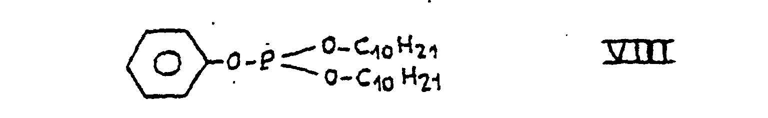 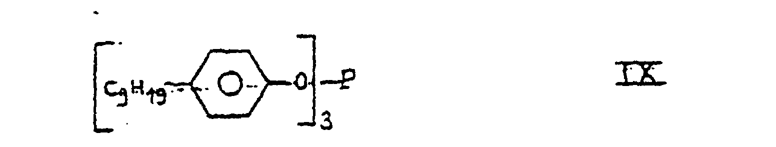 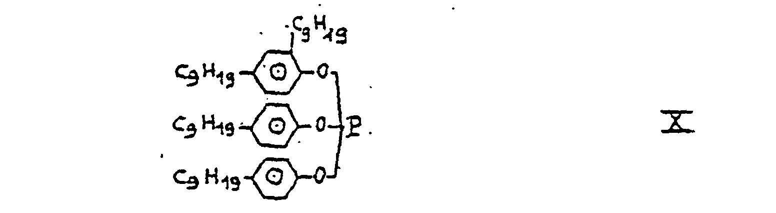 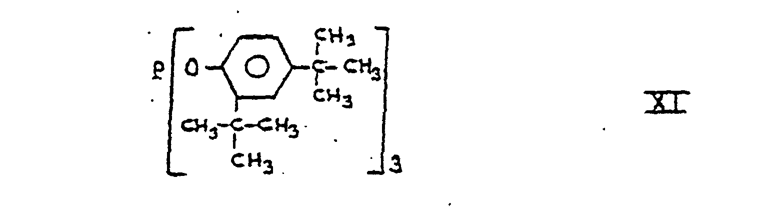 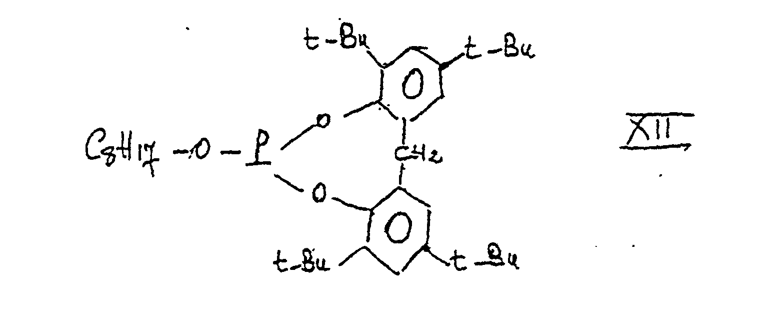 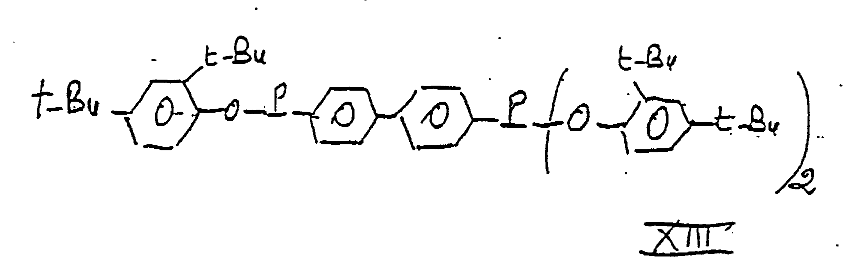
- the additive (b) being used in a proportion of 0.2 to 1 part by weight and the additive (c) being used in a proportion of 0.05 to 1 part by weight, per 100 parts of silicone composition used to prepare the silicone elastomer.

6. Composition according to claim 5, **characterized in that** the additive (b) is bis(1-octyloxy-2,2,6,6-tetramethyl-4-piperidyl) sebacate.

7. Composition according to claim 5 or 6, **characterized in that** the phosphite (c) is chosen from the phosphites of formulae XI and XII.
